(19) Europäisches Patentamt / European Patent Office / Office européen des brevets

(11) **EP 4 447 138 A1**

(12) **EUROPEAN PATENT APPLICATION**

(43) Date of publication:
**16.10.2024 Bulletin 2024/42**

(21) Application number: **23167749.3**

(22) Date of filing: **13.04.2023**

(51) International Patent Classification (IPC):
**H01M 4/04** (2006.01)        **C25D 7/06** (2006.01)
**H01M 4/38** (2006.01)

(52) Cooperative Patent Classification (CPC):
**H01M 4/0452; C25D 7/0642; C25D 7/065;
H01M 4/0459; H01M 4/381**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **CUSTOMCELLS Holding GmbH
25524 Itzehoe (DE)**

(72) Inventor: **Otepov, Sultan
72760 Reutlingen (DE)**

(74) Representative: **LKGLOBAL
Lorenz & Kopf Patentanwalt
Attorney at Law PartG mbB
Brienner Straße 11
80333 München (DE)**

(54) **A METHOD OF OBTAINING A METALATED BATTERY ELECTRODE**

(57)     The invention relates to a method (100) of obtaining a metalated battery electrode (400), the method (100) comprising:
providing a layer assembly (300) comprising a battery electrode foil (301) and first separator layer (302);
providing an agent (201) comprising a solvent (202) and metal ions (203) dissociated in the solvent (202); and obtaining the metalated battery electrode (400) by exposing the layer assembly (300) to an electric field in the agent (201), the first separator layer (302) being arranged between the battery electrode foil (301) and a first counter electrode (204a).

Fig. 2

**Description**

BACKGROUND

Batteries play a critical role in modern society, powering a wide range of devices from portable electronics to electric vehicles. The increasing demand for portable electronics and electric vehicles has led to a growing need for batteries with higher energy density, longer life-span, and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency of battery production, in particular the production of battery electrodes. Battery electrodes are conductive materials that serve as the positive and negative terminals in a battery.

In the context of battery technology, pre-metalation of the electrodes (i.e. the anodes or cathodes) has been proposed as a way to compensate for the consumption of metal ions in irreversible reactions during the formation of the solid electrolyte interface layer in the initial cycling. By introducing additional metal of the charge carrier species, the consumption of the solid electrolyte interface may be compensated, leading to improved battery performance.

The production of metalated battery electrodes is a challenging task that requires the use of advanced materials and processes. Recent advances have been made in electrochemical pre-metalation of anodes. The metal used for pre-metalation may be lithium, sodium, or other metals that may form alloys with the anode material. The pre-metalation process may be carried out by immersing the anode material in a solvent containing the metal ions, and then applying an electric potential to the solvent to cause the metal ions to deposit onto the surface of the anode material. This process may be used in combination with other techniques to improve the performance of the battery, such as electrochemical pre-lithiation of the cathode material.

US20170187030A1 discloses a method for electrochemical pre-metalation of anodes. The metalated anode is obtained by exposing a layer assembly to an electric field in an electrolyte, wherein the anode is arranged between a pair of counter electrodes. However, the process disclosed in US20170187030A1 suffers from a significant drawback, namely, the large separation between the counter electrodes and the anode, which results in high electrolyte resistance. As a result, a large overpotential is required to achieve practical current densities, with values up to e.g. 6 V needed to achieve 0.9 mA/cm$^2$.

SUMMARY OF THE DISCLOSURE

The present disclosure relates to a method of obtaining a metalated battery electrode. The method comprises providing a layer assembly comprising a battery electrode foil and first separator layer. Furthermore, the method comprises providing an agent comprising a solvent and metal ions dissociated in the solvent. The method also comprises obtaining the metalated battery electrode by exposing the layer assembly to an electric field in the agent, the first separator layer being arranged between the battery electrode foil and a first counter electrode.

By providing such a method, the limitations of conventional techniques (as e.g. described above) can be overcome by minimizing the distance between the electrode foil (e.g. an anode) and the counter electrode, thereby significantly reducing the required (over)potential.

The metalated battery electrode may be a type of battery electrode that contains a metal or metal alloy. The metal reacted with the metalated battery electrode may compensate for the loss of metal ions during initial cycling of the cell. The sum of charge carriers introduced into a battery with metalated anode and cathode may increase the capacity and lifespan of the battery. Of course, the metalated battery electrode may be easily recyclable. For example, the metal ions may be extracted from the electrode material and reused in other batteries. The metalated battery electrode may be or may serve as an anode or a cathode of a battery cell.

By layer assembly any kind of layered structure may be meant. In general, the layer assembly may be constructed by layering different materials on top of each other. The layer assembly may be constructed by using various techniques such as calendering, coating, casting, or pressing. Furthermore, the first separator layer may be applied to the surface of the battery electrode foil using a variety of methods, such as lamination, sputtering, or vapor deposition. The different layers in the assembly may serve different functions such as providing structural support, increasing conductivity, recyclability or improving the electrochemical performance of the battery electrode. The layer assembly may be provided, for example, by pressing (with optional lamination) the first separator layer on the battery electrode foil.

The battery electrode foil may be a thin sheet of material that is used as one of the electrodes in a battery. The battery electrode foil may have any thickness and shape. The battery electrode foil may, for example have a round or a rectangular shape. The battery electrode foil typically comprises a current collector with electrode material applied to it from one or both sides. For example, the current collector of the battery electrode foil may be made from a metal such as copper or aluminum.

The active material of the negative battery electrode foil (i.e, anode) may, for example, comprise silicon, silicon oxides, carbon material, combinations thereof, and composites thereof. For example, the battery electrode foil may comprise a silicon suboxide-carbon (SiOx/C, $1 \le x \le 2$) composite. The silicon suboxide-carbon (SiOx/C, $1 \le x \le 2$) composite is just one example of a material that may be used in the battery electrode foil. The examples of the active material of the positive battery electrode foil (i.e., cathode) in, for example Li-ion batteries, include lithium cobalt oxide, lithium manganese oxides, lithium iron phosphate, lithium manganese iron phosphates, lithium nickel manganese cobalt oxide, lithium titanium oxide and lithium cobalt aluminum oxide. The material of the battery electrode foil may be chosen to guarantee a good electrical conductivity, high thermal stability, and low resistance.

The separator layer may serve as a physical and electrical barrier between the battery electrode and the counter electrode, preventing them from coming into direct contact while still allowing ions to pass through. In other words, the first separator layer may be or may have the function of a membrane. The separator layer may serve as a spacer between the battery electrode foil and a first counter electrode. The separator layer may have properties that ensure optimal distance between the battery electrode foil and a first counter electrode. Furthermore, the separator layer may be puncture resistant. In addition to its role as a spacer and puncture resistance, the separator layer may also play a crucial role in preventing short circuits and overheating. This may be because the separator layer is designed to allow the flow of metal ions to the battery electrode foil. The separator layer may be made from or may comprise various materials, such as polymer films, non-woven fabrics, or ceramic membranes.

The thickness of the separator layer may be an important factor for the metalation process. The thickness of the separator layer may be in the range of 20 to 30 $\mu$m. However, thicker separator layer may be selected for improved durability. A thicker separator layer may provide better mechanical stability and insulation but may also increase the distance between the battery electrode foil and the first counter electrode. A higher distance between the battery electrode foil and the first counter electrode may require high energy and may decrease the efficiency of the metalation process. On the other hand, a thinner separator layer may offer lower resistance and higher power density but may also increase the risk of short circuits.

The metalated battery electrode may serve as an active material for the battery. The agent may be a source of metal ions or particles to be moved into the active material. In other words, the active material may comprise metals that moved from the agent into the battery electrode foil. During the operation of the battery, the active material may be the material that may undergo a reversible electrochemical reaction during the charge and discharge process. In other words, the active material may be the substance that may participate in the electrochemical reactions producing the flow of electrons within the battery.

The agent may refer to a mixture of a solvent or liquid and metal ions that have separated or dissociated from their original source and may be then dispersed within the solvent. In one example, the solvent may also be a solution. When certain types of metals or their compounds may be dissolved in a solvent, they may break down into positively charged metal ions and negatively charged counter ions (e.g. chloride, sulfate). The resulting solvent may possibly contain these dissociated metal ions, which may be free to move and interact with other molecules or particles in the solvent. The agent may comprise all kinds of metal ions such as ions of lithium, sodium, magnesium, aluminum, potassium and/or calcium.

The layer assembly may be immersed into a bath of agent. The bath of agent may contain metal salts dissolved in a solvent. The metals, for example, may be selected from lithium, sodium, magnesium, aluminum, potassium and/or calcium. The salts may, for example, comprise halides (fluoride, chloride, boride, iodide), nitrates, sulfates, carbonates of the mentioned metals. Thus, the dissociation of the salt should give metal cations, such as $Li^+$, $Na^+$, $Mg^{2+}$, $Al^{3+}$, $K^+$, $Ca^{2+}$, and anions, such as $F^-$, $Cl^-$, $Br$, $I^-$, $NO_3^-$, $SO_4^{2-}$, $CO_3^{2-}$. The examples of the solvent are butylene carbonate, propylene carbonate, ethylene carbonate, vinylene carbonate, vinyl ethylene carbonate, dimethyl carbonate, diethyl carbonate, dipropyl carbonate, methyl ethyl carbonate, acetonitrile, gamma-butyrolactone (GBL), triglyme, tetraglyme, dimethylsulfoxide, dioxolane, sulfolane, and mixtures thereof. The choice of solvent or solvent may ensure that the resulting metal ion solvent may have suitable properties for its intended application, such as stability, reactivity, and toxicity. For example, for metalation of battery electrode foil with lithium, the bath of agent may be a 0.5 M (i.e., M is molar) solvent of lithium chloride (LiCl) in GBL.

The agent may be configured to comprise as many metal ions as possible. Using a high concentration of metal ions may reduce the amount of time and energy needed to create the metalated electrode, which may improve the overall efficiency and cost-effectiveness of the battery production process.

The electric field may be generated by applying a voltage or current to the battery electrode foil and/or the first counter electrode. This voltage or current may create an electric potential difference between the battery electrode foil and the metal ions in the solvent. The metal ions in the solvent may carry a positive charge, while the electrode may carry a negative. When a positive potential is applied to the counter electrode, the metal cations in the solvent may be attracted to the battery electrode foil which has negative charge, while anions may be attracted to the counter electrode which has a positive charge. Thus, oxidation of the anions takes place at the counter electrode, while the metal cations are reduced at the battery electrode foil. For example, in case of LiCl salt the redox half-reactions may look as follows:

Oxidation of Cl⁻ at the counter electrode: $2Cl^- \rightarrow 2e^- + Cl_2$,
Reduction of metal cations at the battery electrode foil: $Li^+ + e^- + \text{electrode} \rightarrow Li/\text{electrode}$,
Overall reaction equation: $2\ LiCl + \text{electrode} \rightarrow 2\ Li/\text{electrode} + Cl_2$,
where "electrode" stands for the battery electrode foil and "Li/electrode" refers to the metalated battery electrode foil.

The electric field may also affect the properties of the resulting metalated battery electrode. By controlling the voltage and current during the electrolysis process, it may be possible to tune the thickness, morphology, and composition of the metalated layer on the electrode. This may have a significant impact on the performance of the battery electrode, such as its capacity, cycle life, and rate capability. The electric field used in electrolysis may also lead to other electrochemical reactions in the metal ion solvent or agent, such as the reduction or oxidation of other chemical species. These reactions may affect the purity and stability of the metal ion solvent or agent, which may in turn affect the quality of the resulting metalated battery electrode. Therefore, careful control of the electric field and other process parameters may be essential for the successful creation of high-quality metalated battery electrodes.

"Exposing" the layer assembly to the electric field in this context means that the layer assembly may be placed in the agent and then subjected to an electric field. The electric field may cause the metal ions to be attracted to the surface of the battery electrode and react with it, resulting in the formation of the metalated battery electrode.

The first counter electrode may serve to complete the electrical circuit by providing a source of electrons for the metalation process. The first counter electrode may be prepared from durable metallic foil (e.g. titanium). The choice of material for the first counter electrode may depend on various factors such as cost, availability, chemical stability and desired properties such as flexibility, durability, and low resistance.

The disclosed method may potentially be eight times faster than prior art, which may result in a reduction of bath length by a factor of eight.

In one aspect, the first separator layer may be in contact with the first counter electrode and/or the battery electrode foil, when exposing the layer assembly to the electric field in the agent.

The first counter electrode may be in contact with the first separator layer in order to facilitate the movement of the layer assembly through the bath of the agent. By applying a force with the first counter electrode, the layer assembly may be moved through the bath.

In one aspect, the first counter electrode may have a mesh structure.

A mesh structure may be a type of material that may be characterized by a network of interconnected wires or filaments that form a mesh-like pattern. The mesh structure may allow better metal ion flow or electrolyte flow between the battery electrode foil and first counter electrode. This may be essential to let formed $Cl_2$ diffuse away and let fresh LiCl species diffuse in. The mesh structure of the first counter electrode may comprise holes or pores and the metal ions and counter ions can flow through these holes.

In one aspect, the electric field may be configured to have a homogeneous distribution across the layer assembly while exposing the layer assembly to the electric field in the agent.

A homogeneous distribution may mean that the electric potential at the surface of the battery electrode foil may be evenly distributed, which may lead to a more uniform distribution of metal ions and a more homogeneous metalation of the battery electrode foil. To achieve a homogeneous distribution of the electric field, the voltage and current applied to the layer assembly during the metalation process may be controlled and adjusted to ensure that the electric potential is evenly distributed. Other factors, such as the geometry and orientation of the electrodes and the properties of the agent, may also play a role in achieving a homogeneous distribution of the electric field.

In one aspect, the first counter electrode comprises a conveyor belt.

The conveyor belt may be a moving conveyor belt, which is in contact with the layer assembly. The first separator layer may be in contact with the conveyor belt. That means the conveyor belt and the layer assembly may move with the same speed. The first separator layer that is in contact with the conveyor belt may have mechanical properties to ensure that the layer assembly may be transported effectively and without damage. The separator layer may be strong enough to withstand the movement and tension of the conveyor belt, while also being flexible enough to conform to the surface of the conveyor belt.

The speed of the conveyor belt may have other positive effects on the metalation process. For example, the speed of the conveyor belt may be adjusted to cause turbulent flow in the agent. Turbulent flow in the agent may be advantageous for agitating the solvent. Agitation is necessary to mix the freshly added solvent with the bulk solvent and move byproducts of the metalation away from the layer assembly and/or the conveyor belt.

In one aspect, the electric field may be generated by a potential between the battery electrode foil and the first counter electrode.

The strength and direction of the electric field may be controlled by the magnitude and polarity of the potential difference between the battery electrode foil and the first counter electrode.

In one aspect, the method may further comprise removing the first separator layer after exposing the layer assembly to the electric field in the agent.

Once the layer assembly may have been exposed to the electric field in the agent, the metal ions may have been reacted with the surface layer of the battery electrode foil, resulting in the formation of the metalated battery electrode. The removal of the first separator layer may then be carried out using a suitable technique, such as peeling or dissolution. After the removal of the first separator layer, the metalated battery electrode may be further processed and incorporated into a complete battery system.

In one aspect, the method may further comprise winding up the first separator layer and/or the metalated battery electrode, after obtaining the metalated battery electrode.

In other words, after the layer assembly may have passed through the moving-belt counter electrodes and may have been metalated, the separator layer may be rewound. Depending on the durability of the separator, it may be reused in a closed loop, which may be a more sustainable approach. However, for better waste disposal, the separator layer may be rinsed in a separate bath before rewinding to remove any remaining agent. This may ensure that the separator layer may be clean and ready for reuse or disposal, depending on its condition. By rewinding the separator layer, it may be efficiently stored and transported to the next step in the battery cell production process.

Winding up may be achieved by using a coil. Using a coil to wind up the layer assembly may help to prevent the formation of wrinkles or folds in the first separator layer and/or the metalated battery electrode.

Winding up the first separator layer and/or the metalated battery electrode after removing the first separator layer may provide the advantage of a better drying process. For example, when the metalated battery electrode is removed from the agent, there may be residual agent present on the surface of the first separator layer and/or the metalated battery electrode. This residual agent may need to be removed to ensure that the subsequent processing and use of the metalated battery electrode may not be compromised. Winding up the first separator layer and/or the metalated battery electrode may be an effective way to remove this residual agent. By winding up the layer assembly, the residual agent may be squeezed out and collected, leaving the first separator layer and/or the metalated battery electrode in a drier state. This may improve the performance of the processing steps, such as the formation of a complete battery, by reducing the risk of unwanted reactions or contamination.

In one aspect, the method may further comprise providing the layer assembly with a second separator layer. The first separator layer may be arranged on one side of the battery electrode foil and the second separator layer may be arranged on the other side of the battery electrode foil. The second separator layer may be arranged between the battery electrode foil and a second counter electrode.

The second separator layer may have the same properties and/or functions like the first separator layer. Furthermore, the second counter electrode may have the same properties and/or functions like the first counter electrode.

The metalated battery electrode may be obtained by exposing the layer assembly to an electric field in the agent, wherein the first separator layer being arranged between the battery electrode foil and a first counter electrode and the second separator layer being arranged between the battery electrode foil and a second counter electrode. The second counter electrode may have a mesh structure. The second counter electrode may comprise a conveyor belt. The electric filed may be generated by a potential between the battery electrode foil and the second counter electrode. The method may comprise removing the second separator layer after exposing the layer assembly to the electric field in the agent. The method may further comprise winding up the second separator layer, after obtaining the metalated battery electrode.

In one aspect, a metalated battery electrode may be obtained according to any examples of the present disclosure.

The metalated battery electrode produced using the method described in the present disclosure may be used in various electrochemical devices, such as batteries, supercapacitors, and other energy storage and conversion devices. These devices may be possibly used in a wide range of applications, including portable electronic devices, electric vehicles, grid energy storage, and renewable energy systems.

The present disclosure also relates to a method of producing a battery cell. The method of producing a battery cell may comprise obtaining a metalated battery electrode according to any examples of the present disclosure.

The present disclosure also relates to a counter electrode for metalating a battery electrode foil. The counter electrode may have a mesh structure and the counter electrode may comprise a conveyor belt. The conveyor belt may be configured to transport or more (or convey) a layer assembly through a bath of agent.

In one aspect, the counter electrode may be configured to generate an electric field. The electric field may be configured to have a homogeneous distribution throughout the layer assembly while exposing the layer assembly to the agent.

The present disclosure also relates to a system for metalating a battery electrode foil. A system may comprise a bath of agent and the agent may comprise a solvent and metal salt dissociated in the solvent. Furthermore, the system may comprise a counter electrode according to any examples of the present disclosure.

The layer assembly may be moved through a bath of agent by the multiple counter electrodes, wherein each of the counter electrodes may comprise a conveyor belt. Furthermore, the system may comprise multiple side rolls.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

BRIEF DESCRIPTION OF THE DRAWINGS

Fig. 1 show a flowchart of a method 100 of obtaining a metalated battery electrode according to examples of the present disclosure.

Fig. 2 schematically shows a method 100 of obtaining the metalated battery electrode 400 with a manufacturing system 200 according to examples of the present disclosure.

Fig. 3A shows a schematic drawing of the battery electrode foil 301 according to examples of the present disclosure.

Fig. 3B shows a schematic drawing of the layer assembly 300 comprising the battery electrode foil 301 of Fig. 3A, the first separator layer 302 according to examples of the present disclosure.

Fig. 3C shows the layer assembly 300 comprising the battery electrode foil 301 and the first separator layer 302 of Fig. 3A, and a second separator layer 303 according to examples of the present disclosure.

Fig. 4 shows the first conveyor belt 205a and the first counter electrode 204a with a mesh structure.

Fig. 5A shows a schematic drawing of a system 500 with multiple counter electrodes 204a, 204b, 204c, 204d, 204e, 204f, 204g, 204h according to examples of the present disclosure.

Fig. 5B shows an alternative embodiment of manufacturing system 500 shown in Fig. 5A.

Fig. 6 shows the process of lithiation without a separator layer 302 according to prior art.

DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

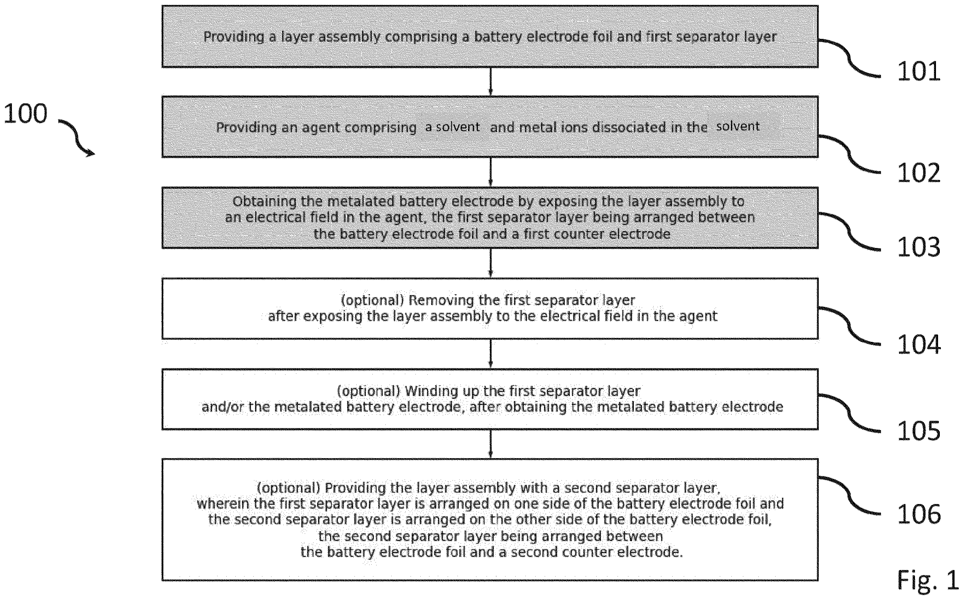

Fig. 1 shows a flowchart of a method 100 of obtaining a metalated battery electrode according to examples of the present disclosure.

In a first step 101, a layer assembly comprising a battery electrode foil and first separator layer is obtained. After the first step 101, the method comprises a second step 102 of providing an agent comprising a solvent and metal salt dissociated in the solvent. In a third step 103, the metalated battery electrode is obtained by exposing the layer assembly to an electric field in the agent, the first separator layer being arranged between the battery electrode foil and a first counter electrode.

After the steps 101 to 103, it is possible that the method 100 comprises further optional steps. For example, the method 100 may comprise an optional fourth step 104 of removing the first separator layer after exposing the layer assembly to the electric field in the agent. Furthermore, an optional fifth step 105 may be winding up the first separator layer and/or the metalated battery electrode, after obtaining the metalated battery electrode. In an optional sixth step 106, the layer assembly is provided with a second separator layer, wherein the first separator layer is arranged on one side of the battery electrode foil and the second separator layer is arranged on the other side of the battery electrode foil, the second separator layer being arranged between the battery electrode foil and a second counter electrode.

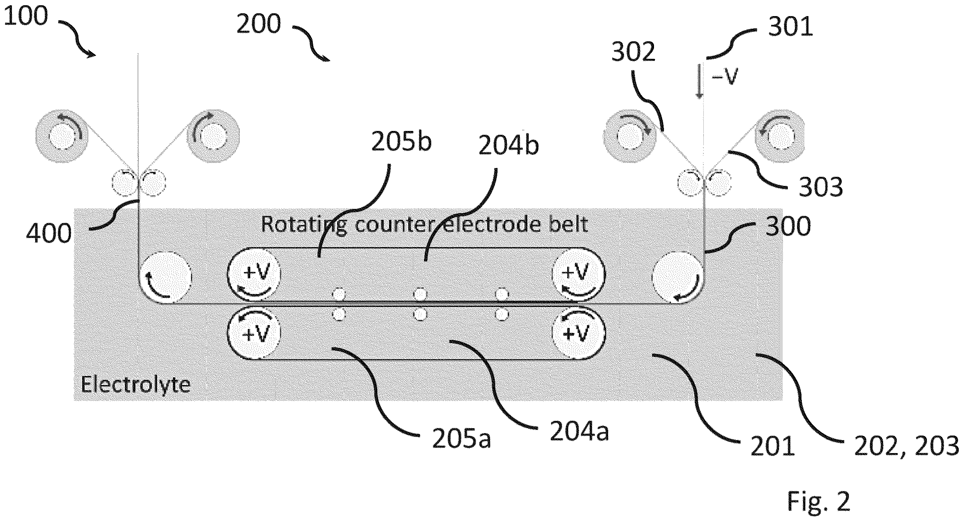

Fig. 2 schematically shows a method 100 of obtaining the metalated battery electrode 400 with a manufacturing system 200 according to examples of the present disclosure.

First, a layer assembly 300 with a battery electrode foil 301, a first separator layer 302, and a second separator layer 303 is obtained. The layer assembly 300 is negatively charged (-V). Both the first separator layer 302 and the second separator layer 303 are unwound from a coil. The first separator layer 302 is arranged on one side of the battery electrode foil 301 and the second separator layer 303 is arranged on the other side of the battery electrode foil 301. The layer assembly 300 is then immersed in a bath of agent 201. The agent 201 comprises a solvent 202 and metal salt 203 dissociated in the solvent 202. The manufacturing system 200 comprises a first counter electrode 204a and a second counter electrode 204b. The first counter electrode 204a comprises a first conveyor belt 205a and the second counter electrode 204b comprises a second conveyor belt 205b. In other words, the manufacturing system 200 comprises two moving-belt counter-electrodes 204a, 204b, 205a, 205b. The first counter electrode 204a and the second counter electrode 204b are both connected to a positive potential (+V), with an ideal voltage range of 4.2 to 5 V applied to achieve approximately 10 mA/cm2 of current. The layer assembly 300 passes through the first counter electrode 204a and the second counter electrode 204b, wherein the layer assembly 300 is moved by rotation of the first conveyor belt 205a and the second conveyor belt 205b. A metalated battery electrode 400 is obtained and pulled out of the agent 201. In a last step, the first separator layer 302 and the second separator layer 303 are removed from the metalated battery electrode 400.

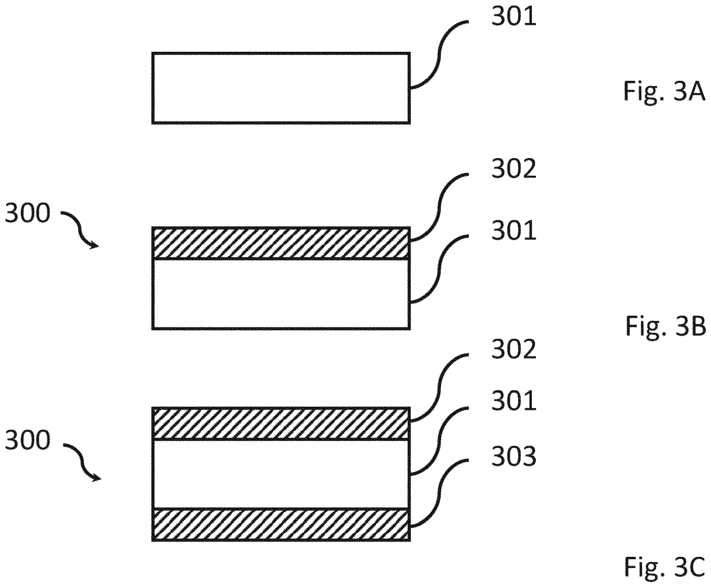

Fig. 3A shows a schematic drawing of the battery electrode foil 301 according to examples of the present disclosure. The battery electrode foil 301 has a thickness of 75 $\mu$m. The battery electrode foil 301 may comprise silicon as active material.

Fig. 3B shows a schematic drawing of the layer assembly 300 comprising the battery electrode foil 301 of Fig. 3A, the first separator layer 302 according to examples of the present disclosure. The first separator layer 302 attached to the battery electrode foil 301. The first separator layer 302 may be a polymer.

Fig. 3C shows the layer assembly 300 comprising the battery electrode foil 301 and the first separator layer 302 of Fig. 3A, and a second separator layer 303 according to examples of the present disclosure. The first separator layer 302 is arranged on the top side of the battery electrode foil 301 and the second separator layer 303 is arranged on the bottom side of the battery electrode foil 301. This arrangement of the layer assembly 300 creates a sandwich-like structure with the battery electrode foil 301 in between the first separator layer 302 and the second separator layer 303. The first separator layer 302 and the second separator layer 303 have a thickness of 20 $\mu$m and are from the same material.

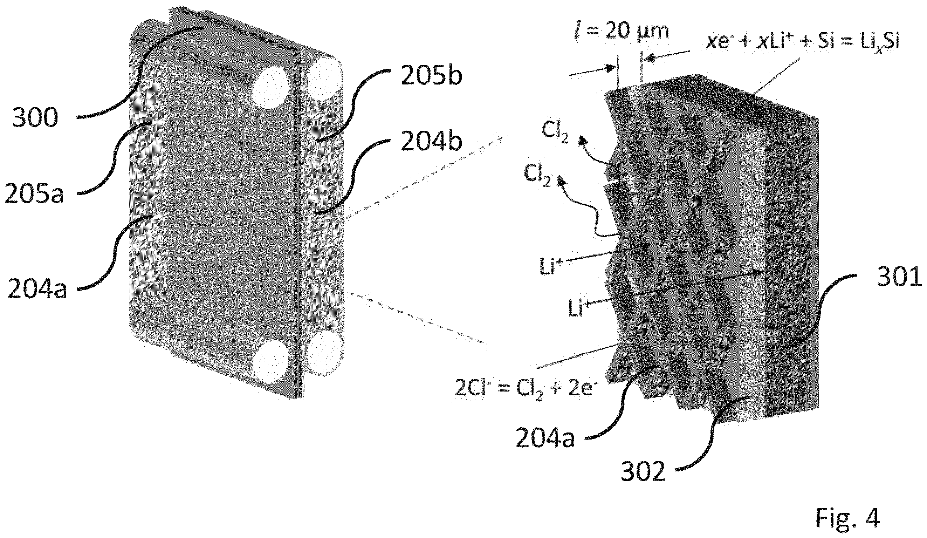

Fig. 4 shows the first conveyor belt 205a and the first counter electrode 204a with a mesh structure.

The mesh structure of the first counter electrode 204a allows chlorine ions (Cl$^-$) to move away from the layer assembly 300 by passing through the mesh. At the first counter electrode 204a, the chlorine ions are oxidized to Cl$_2$ molecules.

Furthermore, lithium ions (Li$^+$) may move from the agent 201 into the battery electrode foil 301. The lithium ions (Li$^+$) may pass the first separator layer 302, which has a thickness of 20 $\mu$m.

At the surface of the battery electrode foil 301, the chemical reaction depicted by the following equation

$$xe^- + xLi+ + Si = Li_xSi$$

may occur. The electrochemical reaction describes the process during the lithiation of silicon (Si) to form lithium silicide (Li$_x$Si). In this reaction, x number of lithium ions (Li$^+$) and x number of electrons (e$^-$) are added to Si, resulting in the formation of Li$_x$Si. The subscript 'x' represents the variable number of lithium atoms that can be added to Si, which may be up to e.g. 4.4.

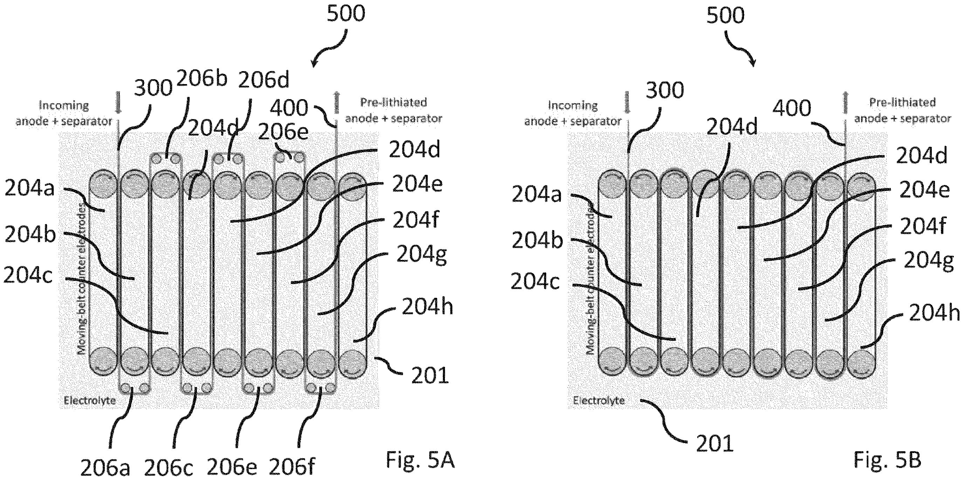

Fig. 5A shows a schematic drawing of a system 500 with multiple counter electrodes 204a, 204b, 204c, 204d, 204e, 204f, 204g, 204h according to examples of the present disclosure.

The layer assembly 300 is moved through a bath of agent 201 by the multiple counter electrodes 204a, 204b, 204c, 204d, 204e, 204f, 204g, 204h, each of the counter electrodes 204a, 204b, 204c, 204d, 204e, 204f, 204g, 204h comprising (or being formed by) a conveyor belt. The multiple counter electrodes may be arranged (at least substantially) in parallel. The system 500 may be configured such that the layer assembly 300 is moved in a serpentine form or "S" form through the multiple counter electrodes. Accordingly, the layer assembly 300 can be conditioned (i.e. subjected to an electric field in the bath) for a longer time leading to an improved metalation.

Furthermore, the system 500 may comprise multiple side rolls 206a, 206b, 206c, 206d, 206e, 206f. The advantage of the side rolls 206a, 206b, 206c, 206d, 206e, 206f in this system 300 may be to ensure that the layer assembly 300 stays in contact with the counter electrodes 204a, 204b, 204c, 204d, 204e, 204f, 204g, 204h as it moves through the bath of agent 201. Without the side rolls 206a, 206b, 206c, 206d, 206e, 206f, the layer assembly 300 may not make full contact with the conveyor belts of the counter electrodes 204a, 204b, 204c, 204d, 204e, 204f, 204g, 204h, which may result in inconsistent electrochemical pre-lithiation. The side rolls 206a, 206b, 206c, 206d, 206e, 206f may also help to maintain the tension of the layer assembly 300 as it moves through the system 500, preventing it from becoming too loose or too tight. This may ensure that the layer assembly 300 maintains its position and alignment as it passes through the counter electrodes 204a, 204b, 204c, 204d, 204e, 204f, 204g, 204h, which may be important for consistent and reliable pre-lithiation.

Fig. 5B shows an alternative embodiment of manufacturing system 500 shown in Fig. 5A. The system 500 of Fig. 5B does not comprise any side rolls 206a, 206b, 206c, 206d, 206e, 206f. Without side rolls 206a, 206b, 206c, 206d, 206e, 206f, the layer assembly 300 may be moved through the counter electrodes 204a, 204b, 204c, 204d, 204e, 204f, 204g, 204h using a simple conveyor belt system, which may be easier to construct and maintain. Additionally, removing the side rolls 206a, 206b, 206c, 206d, 206e, 206f may reduce the risk of damaging the separator layer 302 or other components during the production process.

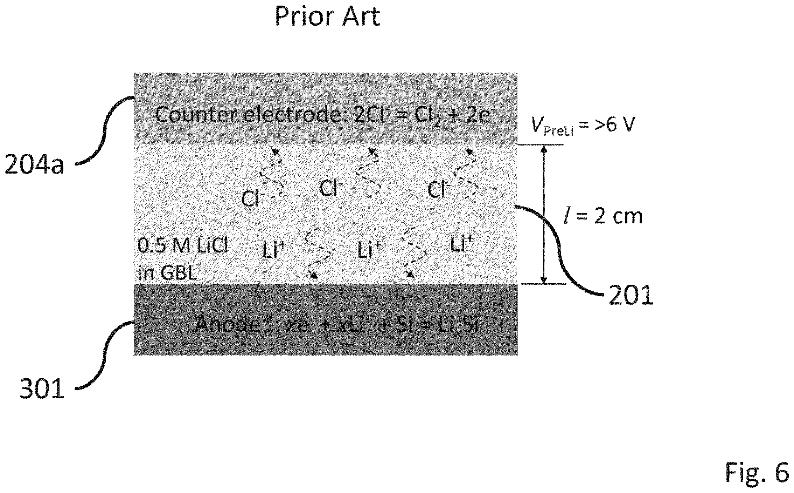

Fig. 6 shows the process of lithiation without a separator layer 302 according to prior art.

The gap between the first counter electrode 204a and the battery electrode foil 301 (i.e anode) is filled with agent 201 (i.e. electrolyte). By neglecting the interfacial resistance at counter electrode/agent and battery electrode foil/agent junctions, the potential required to conduct the pre-lithiation ($V_{\text{PreLi}}$) can be given as:

$$V_{\text{PreLi}} = E_{cell} + JR_{\text{E}}A = \left(E_{\text{Cl}^-/\text{Cl}_2} - E_{\text{Li}^+/\text{Li}_x\text{Si}}\right) + JR_{\text{E}}A$$

where $E_{\text{cell}}$ may be about 4.2 V (at RT and 0.5 M LiCl), J is the current density, A is the surface area, and $R_{\text{E}}$ is the bulk resistance of the solvent.

$R_{\text{E}}$ is described as:

$$R_{\text{E}} = \frac{\rho_{\text{E}}L}{A}$$

where $\rho_{\text{E}}$ is the resistivity of the electrolyte and L is the distance between the electrodes. Thus, the above equation may be rewritten as:

$$V_{\text{PreLi}} = E_{cell} + J\rho_{\text{E}}L$$

From the equation, if $L \to 0$, then $V_{\text{PreLi}} \to 4.2$ V. In other words, in this example, the excess potential may be spent to overcome the resistance of the electrolyte. Overall, the distance L of 2 cm may require a high potential. A high potential, however, may lead to side reactions of the solvent.

A separator layer 302 may serve as a spacer and may also play a crucial role in preventing short circuits between the first counter electrode 204a and the battery electrode foil 301. With a separator layer 302, it may be possible to use a lower potential for the electrical field. It may be possible that only 0.31 V over-potential is required to achieve a current density of 10 mA/cm2.

A separator layer 302 may reduce the time for the metalation process. The metalation process with a separator layer 302 may be 8 times faster.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

A reference herein to a patent document or any other matter identified as prior art, is not to be taken as an admission that the document or other matter was known or that the information it contains was part of the common general knowledge as at the priority date of any of the claims.

**Claims**

1.   A method (100) of obtaining a metalated battery electrode (400), the method (100) comprising:

   providing a layer assembly (300) comprising a battery electrode foil (301) and first separator layer (302);
   providing an agent (201) comprising a solvent (202) and metal ions (203) dissociated in the solvent (202); and
   obtaining the metalated battery electrode (400) by exposing the layer assembly (300) to an electric field in the agent (201), the first separator layer (302) being arranged between the battery electrode foil (301) and a first counter electrode (204a).

2.   The method (100) of claim 1, wherein the first separator layer (302) is in contact with the first counter electrode (204a) and/or the battery electrode foil, when exposing the layer assembly (300) to the electric field in the agent (201).

3.   The method (100) according to any one of the preceding claims, wherein the first counter electrode (204a) has a mesh structure.

4. The method (100) according to any one of the preceding claims, wherein the electric field is configured to have a homogeneous distribution across the layer assembly (300) while exposing the layer assembly (300) to the electric field in the agent (201).

5. The method (100) according to any one of the preceding claims, wherein the first counter electrode (204a) comprises a conveyor belt (205a).

6. The method (100) according to any one of the preceding claims, wherein the electric field is generated by a potential between the battery electrode foil (301) and the first counter electrode (204a).

7. The method (100) according to any one of the preceding claims, further comprising: removing the first separator layer (302) after exposing the layer assembly (300) to the electric field in the agent (201).

8. The method (100) according to any one of the preceding claims, further comprising: winding up the first separator layer (302) and/or the metalated battery electrode (400), after obtaining the metalated battery electrode (400).

9. The method (100) according to any one of the preceding claims, further comprising:

   providing the layer assembly (300) with a second separator layer (303),
   wherein the first separator layer (302) is arranged on one side of the battery electrode foil (301) and the second separator layer (303) is arranged on the other side of the battery electrode foil (301),
   the second separator layer (303) being arranged between the battery electrode foil (301) and a second counter electrode (204a, 204b, 204c, 204d, 204e, 204f, 204g, 204h).

10. A metalated battery electrode (400) obtained by any one of the preceding claims.

11. A method (100) of producing a battery cell, the method (100) comprising: obtaining a metalated battery electrode (400) according to any one of the preceding claims.

12. A counter electrode (204a, 204b, 204c, 204d, 204e, 204f, 204g, 204h) for metalating a battery electrode foil (301), wherein the counter electrode (204a, 204b, 204c, 204d, 204e, 204f, 204g, 204h) has a mesh structure and wherein the counter electrode (204a, 204b, 204c, 204d, 204e, 204f, 204g, 204h) comprises a conveyor belt (205a, 205b), wherein the conveyor belt (205a, 205b) is configured to convey a layer assembly (300) through a bath of agent (201).

13. The counter electrode (204a, 204b, 204c, 204d, 204e, 204f, 204g, 204h) of claim 12, wherein the counter electrode (204a, 204b, 204c, 204d, 204e, 204f, 204g, 204h) is configured to generate an electric field, wherein the electric field is configured to have a homogeneous distribution throughout the layer assembly (300) while exposing the layer assembly (300) to the electric field in the agent (201).

14. A system (500) for metalating a battery electrode foil (301), the system (500) comprising:

   a bath of agent (201), wherein the agent (201) comprises a solvent (202) and metal ions (203) dissociated in the solvent (202); and
   a counter electrode (204a, 204b, 204c, 204d, 204e, 204f, 204g, 204h) according to any one of the preceding claims.

**100**

**101** Providing a layer assembly comprising a battery electrode foil and first separator layer

**102** Providing an agent comprising a solvent and metal ions dissociated in the solvent

**103** Obtaining the metalated battery electrode by exposing the layer assembly to an electrical field in the agent, the first separator layer being arranged between the battery electrode foil and a first counter electrode

**104** (optional) Removing the first separator layer after exposing the layer assembly to the electrical field in the agent

**105** (optional) Winding up the first separator layer and/or the metalated battery electrode, after obtaining the metalated battery electrode

**106** (optional) Providing the layer assembly with a second separator layer, wherein the first separator layer is arranged on one side of the battery electrode foil and the second separator layer is arranged on the other side of the battery electrode foil, the second separator layer being arranged between the battery electrode foil and a second counter electrode.

Fig. 1

Fig. 2

301

Fig. 3A

300

302

301

Fig. 3B

300

302

301

303

Fig. 3C

EP 4 447 138 A1

$l = 20\ \mu m$

$xe^- + xLi^+ + Si = Li_xSi$

$Cl_2$

$Cl_2$

$Li^+$

$Li^+$

$2Cl^- = Cl_2 + 2e^-$

300

205b

205a

204b

204a

301

204a

302

Fig. 4

EP 4 447 138 A1

Fig. 5A

Fig. 5B

EP 4 447 138 A1

14

Prior Art

Fig. 6

EP 4 447 138 A1

Europäisches
Patentamt

European
Patent Office

Office européen
des brevets

# EUROPEAN SEARCH REPORT

Application Number

EP 23 16 7749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 3 940 821 A1 (LG ENERGY SOLUTION LTD [KR]) 19 January 2022 (2022-01-19)<br>* claims 1-10 *<br>* figures 1-3 * | 1-4,<br>6-11,14<br>5,12,13 | INV.<br>H01M4/04<br>C25D7/06<br>H01M4/38 |
| X<br>A | WO 2018/038957 A1 (ENERMAT TECHNOLGIES INC [US]) 1 March 2018 (2018-03-01)<br>* claims 22,23,27-34 *<br>* figures 7,12 * | 1-4,<br>6-11,14<br>5,12,13 | |
| X<br>A | WO 2021/112686 A1 (IPR HOLDING AS [NO]) 10 June 2021 (2021-06-10)<br>* claims 1-9 *<br>* figure 4 * | 1-4,<br>6-11,14<br>5,12,13 | |
| X<br>A | US 2016/301075 A1 (ZHAMU ARUNA [US] ET AL) 13 October 2016 (2016-10-13)<br>* claims 13,16-18 * | 1-4,6,<br>11,14<br>5,12,13 | |
| X<br>A | EP 3 863 085 A1 (LG ENERGY SOLUTION LTD [KR]) 11 August 2021 (2021-08-11)<br>* paragraphs [0042], [0066] - [0069] * | 1,2,4,6,<br>7,10,14<br>3,5,8,9,<br>12,13 | TECHNICAL FIELDS SEARCHED (IPC)<br><br>H01M<br>C23C<br>C25D |

The present search report has been drawn up for all claims

| Place of search | Date of completion of the search | Examiner |
|---|---|---|
| Munich | 29 September 2023 | Haering, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 7749

29-09-2023

| Patent document cited in search report | | | Publication date | Patent family member(s) | | | Publication date |
|---|---|---|---|---|---|---|---|
| EP 3940821 | A1 | 19-01-2022 | | CN | 113678278 | A | 19-11-2021 |
| | | | | EP | 3940821 | A1 | 19-01-2022 |
| | | | | KR | 20200129908 | A | 18-11-2020 |
| | | | | US | 2022216459 | A1 | 07-07-2022 |
| | | | | WO | 2020231088 | A1 | 19-11-2020 |
| WO 2018038957 | A1 | 01-03-2018 | | NONE | | | |
| WO 2021112686 | A1 | 10-06-2021 | | AU | 2020397798 | A1 | 16-06-2022 |
| | | | | CN | 114788037 | A | 22-07-2022 |
| | | | | EP | 4070394 | A1 | 12-10-2022 |
| | | | | JP | 2023509303 | A | 08-03-2023 |
| | | | | NO | 20191439 | A1 | 07-06-2021 |
| | | | | US | 2023006186 | A1 | 05-01-2023 |
| | | | | WO | 2021112686 | A1 | 10-06-2021 |
| US 2016301075 | A1 | 13-10-2016 | | NONE | | | |
| EP 3863085 | A1 | 11-08-2021 | | CN | 113614951 | A | 05-11-2021 |
| | | | | EP | 3863085 | A1 | 11-08-2021 |
| | | | | KR | 20200092643 | A | 04-08-2020 |
| | | | | US | 2022020976 | A1 | 20-01-2022 |
| | | | | WO | 2020153790 | A1 | 30-07-2020 |

EPO FORM P0459

**EP 4 447 138 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170187030 A1